(19) Europäisches Patentamt
European Patent Office
Office européen des brevets

(11) Veröffentlichungsnummer : **0 367 162 B1**

# (12) EUROPÄISCHE PATENTSCHRIFT

(45) Veröffentlichungstag der Patentschrift :
**11.01.95 Patentblatt 95/02**

(51) Int. Cl.[6] : **G03G 9/097**

(21) Anmeldenummer : **89120055.2**

(22) Anmeldetag : **28.10.89**

## (54) Verwendung farbloser hochgradig fluorierter Ammonium- und Immoniumverbindungen als Ladungssteuermittel für elktrophotographische Aufzeichnungsverfahren.

(30) Priorität : **03.11.88 DE 3837345**

(43) Veröffentlichungstag der Anmeldung :
**09.05.90 Patentblatt 90/19**

(45) Bekanntmachung des Hinweises auf die Patenterteilung :
**11.01.95 Patentblatt 95/02**

(84) Benannte Vertragsstaaten :
**BE CH DE FR GB IT LI NL**

(56) Entgegenhaltungen :
**EP-A- 0 050 987**
**EP-A- 0 315 084**
**DE-A- 2 922 948**
**DE-A- 2 940 907**
**FR-A- 2 386 847**
**PATENT ABSTRACTS OF JAPAN vol. 12, no. 460 (P-795)(3307) 05 Dezember 1988, & JP-A-63 182661**
**PATENT ABSTRACTS OF JAPAN vol. 12, no. 258 (C-513)(3105) 20 Juli 1988, & JP-A-63 44566**

(73) Patentinhaber : **HOECHST AKTIENGESELLSCHAFT**
**D-65926 Frankfurt (DE)**

(72) Erfinder : **Gitzel, Jörg, Dr.**
**Domherrnstrasse 2**
**D-6234 Hattersheim am Main (DE)**
Erfinder : **Macholdt, Hans-Tobias, Dr.**
**Waldstrasse 20**
**D-6100 Darmstadt (DE)**
Erfinder : **Sieber, Alexander, Dr.**
**Wartburgstrasse 76**
**D-6230 Frankfurt am Main 80 (DE)**
Erfinder : **Wehowsky, Frank, Dr.**
**Am Apfelgärtchen 11**
**D-6272 Niedernhausen (DE)**
Erfinder : **Prossel, Günther, Dr.**
**Nussbaumstrasse 8**
**D-8269 Burgkirchen (DE)**

**EP 0 367 162 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft die Verwendung hochgradig fluorierter Ammonium- und Immoniumverbindungen als farblose Ladungssteuermittel zum Einsatz in Tonern und Entwicklern für elektrophotographische Aufzeichnungsverfahren. Die erfindungsgemäßen Verbindungen besitzen durch die gezielte Einführung von fluorhaltigen organischen Resten besonders günstige Ladungssteuereigenschaften.

Bei elektrophotographischen Aufzeichnungsverfahren wird auf einem Photoleiter ein "latentes Ladungsbild" erzeugt. Dies erfolgt beispielsweise durch Aufladung eines Photoleiters durch eine Coronaentladung und anschließende bildmäßige Belichtung der elektrostatisch aufgeladenen Oberfläche des Photoleiters, wobei durch die Belichtung der Ladungsabfluß zur geerdeten Unterlage an den belichteten Stellen bewirkt wird. Anschließend wird das so erzeugte "latente Ladungsbild" durch Aufbringen eines Toners entwickelt. In einem darauffolgenden Schritt wird der Toner vom Photoleiter auf beispielsweise Papier, Textilien, Folien oder Kunststoff übertragen und dort beispielsweise durch Druck, Strahlung, Hitze oder Lösungsmitteleinwirkung fixiert. Der benutzte Photoleiter wird anschließend gereinigt und steht für einen neuen Aufzeichnungsvorgang zur Verfügung.

In zahlreichen Patentschriften wird die Optimierung von Tonern beschrieben, wobei u. a. der Einfluß des Tonerbindemittels (Variation von Harz/Harzkomponenten oder Wachs/Wachskomponenten), der Einfluß von Steuermitteln oder anderen Zusatzstoffen oder der Einfluß von Carriern (bei Zweikomponentenentwicklern) und Magnetpigmenten (bei Einkomponentenentwicklern) untersucht wurden (US-PS 2 221 776).

Ein Maß für die Tonerqualität ist seine spezifische Aufladbarkeit Q/M (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. In der Praxis ist dies insofern von zentraler Bedeutung, als der Toner im Entwicklergemisch, bevor er auf den Photoleiter übertragen wird, einer erheblichen Aktivierzeit ausgesetzt sein kann, da er teilweise für einen Zeitraum der Herstellung von bis zu mehreren tausend Kopien im Entwicklergemisch verbleibt. Darüber hinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer triboelektrischer Aufladbarkeit zu erhalten, werden häufig sogenannte Ladungssteuermittel (auch Ladungskontrollmittel genannt) zugesetzt. Dabei ist neben dem Vorzeichen der Ladungssteuerung das Ausmaß des Steuereffektes von Bedeutung, da eine höhere Wirksamkeit eine geringe Einsatzmenge erlaubt.

Da Tonerbindemittel allein in der Regel eine starke Änderung der Aufladung in Abhängigkeit von der Aktivierzeit aufweisen, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen. Ladungssteuermittel, die nicht verhindern können, daß der Toner bzw. Entwickler bei längerer Gebrauchsdauer eine hohe Ladungsdrift zeigt (Alterung), die sogar bewirken kann, daß der Toner bzw. Entwickler eine Ladungsumkehr erfährt, sind daher für die Praxis ungeeignet.

Vollfarbkopierer und Vollfarblaserdrucker arbeiten nach dem Prinzip der Trichromie, welches eine exakte Farbtonabstimmung der drei Grundfarben (Gelb-, Cyan- und Magenta-Pigment) erforderlich macht. Geringste Farbtonverschiebungen auch nur eines der drei Grundfarben verlangt zwingend eine Farbtonverschiebung der beiden anderen Farben, um auch dann originalgetreue Vollfarbkopien bzw. -drucke produzieren zu können. Wegen dieser in Farbtonern erforderlichen präzisen Abstimmung der Coloristik der einzelnen Pigmente aufeinander, sind Ladungssteuermittel absolut ohne Eigenfarbe ganz besonders wichtig.

Bei Farbtonern müssen die drei Toner Gelb, Cyan und Magenta neben den genau definierten farblichen Anforderungen auch hinsichtlich ihrer triboelektrischen Eigenschaften exakt aufeinander abgestimmt sein. Diese triboelektrische Abstimmung ist erforderlich, weil beim Vollfarbdruck bzw. bei der Vollfarbkopie aufeinanderfolgend die drei Farbtoner (bzw. vier Farbtoner, wenn Schwarz miteinbezogen wird) im selben Gerät übertragen werden müssen.

Von Farbpigmenten ist bekannt, daß sie die triboelektrische Aufladung von Tonern teilweise sehr nachhaltig beeinflussen können (H.-T. Macholdt, A. Sieber, Dyes & Pigments 9 (1988), 119-27; US-PS 4 057 426; EP-OS 247 576). Wegen der unterschiedlichen triboelektrischen Effekte von Farbpigmenten und des daraus resultierenden teilweise sehr ausgeprägten Einflusses auf die Toneraufladbarkeit, ist es nicht möglich, sie in eine einmal erstellte Tonerbasisrezeptur als ausschließliches Farbmittel hinzuzufügen. Vielmehr kann es notwendig werden, für jedes Farbmittel eine eigene Rezeptur zu erstellen, für welche z.B. Art und Menge des benötigten Ladungssteuermittels speziell zugeschnitten werden. Dieses Vorgehen ist entsprechend aufwendig und kommt bei Farbtonern für Prozeßfarbe (Trichromie) noch zusätzlich zu den bereits beschriebenen Schwierigkeiten hinzu.
Daher sind hochwirksame farblose Ladungssteuermittel erforderlich, die imstande sind, das unterschiedliche triboelektrische Verhalten verschiedener Pigmente zu kompensieren und dem Toner die gewünschte Aufladung zu verleihen. Auf diese Art und Weise können triboelektrisch sehr unterschiedliche Pigmente anhand einer einmal erstellten Tonerbasisrezeptur mit ein und demselben Ladungssteuermittel in den verschiedenen erforderlichen Tonern (Gelb, Cyan, Magenta) eingesetzt werden.

Als farblose Ladungssteuermittel für elektrophotographische Toner und Entwickler werden Ammonium- (z.B. EP-OS 203 532, EP-OS 242 420, US-PS 4 683 188, US-PS 4 684 596) und Phosphoniumverbindungen (z.B. US-PS 3 893 935, US-PS 4 496 643), Metallkomplexe und -organyle (z.B. US-PS 4 656 112, DE-OS 3 144 017, JP-OS 61-236 557, JP-OS 62-127 754, JP-OS 62-287 262) sowie eine Reihe anderer Verbindungen (z.B. EP-OS 216 295) beschrieben.

Positive farblose Ladungssteuermittel umfassen im wesentlichen quaternäre Ammonium- und Phosphoniumverbindungen sowie einige Zinn- und Antimonorganyle. Allerdings weisen die bisher bekannten farblosen Ladungssteuermittel eine Reihe von Nachteilen auf, die den Einsatz in der Praxis stark einschränken bzw. zum Teil sogar unmöglich machen. So sind die an sich geeigneten quaternären Ammoniumverbindungen schwierig zu dispergieren, können zu ungleichmäßiger Aufladung des Toners führen, und die durch sie erzeugte Tonerladung ist über eine längere Aktivierzeit nicht stabil, insbesondere bei hoher Temperatur und Luftfeuchte (EP-OS 242 420). Ferner können derartige Verbindungen empfindlich gegen Licht oder mechanische Einwirkungen (EP-OS 203 532, US-PS 4 683 188) und thermisch labil sein und liefern Zersetzungsprodukte, die nachteilig für die triboelektrische Aufladung der Toner sein können (US-PS 4 684 596). Darüberhinaus zeigen sie oft wachsartiges Verhalten, zum Teil Wasserlöslichkeit und geringe Wirksamkeit als Ladungssteuermittel (s. Vergleichsbeispiele).

Phophoniumsalze sind als Ladungssteuermittel weniger wirksam als Ammoniumsalze (US-PS 4 496 643) und können toxikologisch problematisch sein. So ist z.B. das als Ladungssteuermittel bekannte Tetra-n-butylphosphoniumbromid (US-PS 3 893 935) stark haut- und schleimhautreizend.

Organozinnborate, wie in EP-OS 216 295 beschrieben, sowie Zinn- (JP-OS 62-287 262) und Antimonorganyle (JP-OS 61-236 557), sind wegen ihrer Schwermetallhaltigkeit problematisch.

Als negative farblose Ladungssteuermittel sind nahezu ausschließlich Schwermetallverbindungen bekannt, nämlich Chrom-, Eisen-, Kobalt- (DE-OS 3 144 017) und Zink-Komplexe (US-PS 4 656 112, JP-OS 62-127 754). Außer der Schwermetallproblematik ist es nachteilig, daß ein Teil dieser Verbindungen nicht wirklich farblos ist und somit in Farbtonern nur beschränkte Anwendung finden kann.

Neben Einarbeitung in das Tonerharz werden Ladungssteuermittel auch zur Beschichtung von Carriern eingesetzt. Dabei kommen die gleichen Verbindungsklassen wie bei Einarbeitung in Tonerharze zum Einsatz, z.B. Ammonium- (JP-OS 61-258 270) und Phosphoniumverbindungen (JP-OS 61-260 258) sowie Schwermetallkomplexe und -organyle (JP-OS 61-147 261, JP-OS 61-259 267).

Die DE-A- 2940 907 beschreibt einen magnetischen Toner, bestehend aus einem magnetischen Material, einem Bindemittelharz und einer Fluor enthaltenden Verbindung, die die Oberfläche des magnetischen Materials vollständig überzieht. Ein homogenes Einarbeiten dieser Fluor enthaltenden Verbindung in das Bindemittelharz wird jedoch nicht durchgeführt, sondern im Gegenteil als überaus nachteilig empfunden.

Grundsätzlich kann festgestellt werden, daß farblose Ladungssteuermittel sowohl für Positiv- als auch für Negativtoner im Prinzip bekannt, doch für den Einsatz in der Praxis nur bedingt oder nicht tauglich bzw. noch weitgehend verbesserungsbedürftig sind.

Ziel der vorliegenden Erfindung war es daher, verbesserte Ladunessteuermittel zu finden, die sich durch absolutes Fehlen einer Eigenfarbe auszeichnen, eine höhere Wirksamkeit besitzen, insbesondere für den Einsatz in Farbtonern geeignet sind und die elektrostatische Aufladung von Tonern und Entwicklern konzentrationsabhängig und schnell einstellen. Des weiteren sollen sie die elektrostatische Aufladung über einen längeren Aktivierzeitraum konstant halten (keine Alterung), vor allem bei hoher Luftfeuchte einwandfrei wirken und mit gängigen Tonerharzen verträglich und gut dispergierbar sein.

Überraschenderweise hat sich nun gezeigt, daß möglichst hochgradig fluorierte Ammonium-und Immoniumverbindungen als farblose Ladungssteuermittel für elektrophotographische Toner und Entwickler besonders günstige Eigenschaften besitzen. Aufgrund ihrer Farblosigkeit, hohen Wirksamkeit, guten Verträglichkeit und Dispergierbarkeit in gängigen Tonerharzen und chemischen Inertheit sind die Verbindungen insbesondere für den Einsatz in Farbtonern bzw. -entwicklern für Vollfarbkopierer nach dem Prinzip der Trichromie (subtraktive Farbmischung), aber auch für farbige Toner bzw. Entwickler im allgemeinen und für schwarze Toner oder Entwickler geeignet. Besonders überraschend ist, daß Substanzen ein und derselben Verbindungsklasse je nach chemischer Modifikation entweder als positive oder auch als negative Ladungssteuermittel geeignet sind (siehe Anwendungsbeispiele 2 und 4). Des weiteren eignen sich die Verbindungen auch für das Beschichten von Carriern.

Ein großer technischer Vorteil dieser gut dispergierbaren Verbindungen liegt darin, daß Substanzen derselben Verbindungsklasse entweder als positives oder als negatives Steuermittel eingesetzt werden können. Somit werden Probleme bei der Einarbeitung in das Tonerbindemittel und der Verträglichkeit mit dem Tonerbindemittel nach Erstellung einer Tonerbasisrezeptur minimiert. Es können so Positiv- wie auch Negativtoner anhand einer festen Tonerbasisrezeptur (bestehend aus Tonerbindemittel, Pigment, Fließhilfsmittel und anderen Bestandteilen) durch Einarbeitung des gewünschten Steuermittels hergestellt werden.

Die Synthese von fluorierten quaternären Ammonium- und Immoniumverbindungen ist bekannt und in US-PS 3 535 381, FR-PS 2 153 489, DE-OS 1 922 277, DE-OS 2 244 297 sowie DE-OS 3 306 933 beschrieben. Eingesetzt werden derartige Verbindungen, z.B. als oberflächenaktive Substanzen, Emulgatoren und Strömungsbeschleuniger wie in DE-OS 2 244 297, DE-PS 2 749 330, DE-OS 3 347 378 und BE-PS 788 335 beschrieben. Völlig neu ist jedoch deren Verwendung als Ladungssteuermittel in elektrophotographischen Tonern und Entwicklern.

Gegenstand der vorliegenden Erfindung ist die Verwendung hochgradig fluorierter Ammoniumverbindungen der allgemeinen Formel (I)

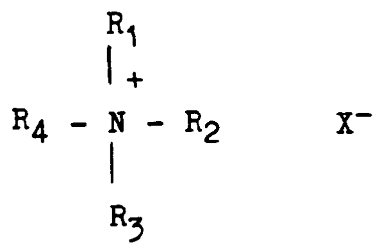

(I),

in welcher $R_1$ bis $R_4$ Wasserstoffatome oder organische Reste bedeuten, wobei mindestens einer der Reste $R_1$ bis $R_4$ einen geradkettigen oder verzweigten fluorhaltigen Alkyl- oder fluorhaltigen Alkenylrest mit 1 bis 69 C-Atomen und 3 bis 66 F-Atomen bedeutet, welcher Hydroxyl- und/oder Chlormethyl- und/oder Carbonsäureamid- und/oder Sulfonsäureamid- und/oder Urethan- und/oder Amino- und/oder $R_5$-O-$R_6$- und/oder

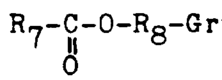

-Gruppen,

worin $R_5$, $R_6$, $R_7$ und $R_5$ Alkyl($C_1$-$C_{30}$)-reste darstellen, enthalten kann, und höchstens drei der Reste $R_1$ bis $R_4$ unabhängig voneinander Wasserstoffatome, geradkettige oder verzweigte Alkyl- oder Alkenylreste mit 1 bis 30 C-Atomen, Arylreste, wie beispielsweise Phenyl- oder Naphthylreste, oder Aralkylreste, wie beispielsweise Benzylreste, darstellen, wobei die Aryl- und Aralkylreste am aromatischen Kern durch Alkyl($C_1$-$C_{30}$)-, Alkoxy($C_1$-$C_{30}$)- oder Hydroxylgruppen oder Halogenatome, wie beispielsweise Fluor-, Chlor-, Brom- oder Jodatome, substituiert sein können, und sich zwei der Reste $R_1$ bis $R_4$ zu einem ein- oder mehrkernigen Ringsystem mit 4 bis 12 C-Atomen, das durch 1 bis 4 Heteroatome, wie beispielsweise Stickstoff-, Sauerstoff- oder Schwefelatome, unterbrochen sein und 0 bis 6 Doppelbindungen enthalten kann, sowie durch Fluor-, Chlor-, Brom- oder Jodatome, Alkyl($C_1$-$C_6$)-, Alkoxy($C_1$-$C_6$)-, Nitro- oder Aminogruppen substituiert sein kann, zusammenschließen können, und $X^-$ ein organisches oder anorganisches Anion bedeutet, wobei die Reste $R_1$ bis $R_4$ durch eine $COO^-$ oder $SO_3^-$-Gruppe substituiert sein können und $X^-$ in diesem Fall gegenstandslos wird, sowie hochgradig fluorierter Immoniumverbindungen der allgemeinen Formel (II)

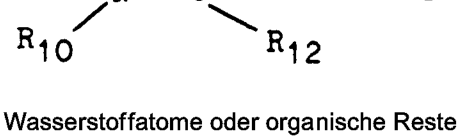

(II),

in welcher $R_9$ bis $R_{12}$ Wasserstoffatome oder organische Reste bedeuten, wobei mindestens einer der Reste $R_9$ bis $R_{12}$ einen geradkettigen oder verzweigten fluorhaltigen Alkyl- oder fluorhaltigen Alkenylrest mit 1 bis 69 C-Atomen und 3 bis 66 F-Atomen bedeutet, welcher Hydroxyl- und/oder Chlormethyl- und/oder Carbonsäureamid- und/oder Sulfonsäureamid- und/oder Urethan- und/oder Amino- und/oder $R_5$-O-$R_6$- und/oder $R_7C(O)$-O-$R_5$-Gruppen, worin $R_5$, $R_6$, $R_7$ und $R_5$ die vorstehend genannten Bedeutungen haben, enthalten kann, und höchstens drei der Reste $R_9$ bis $R_{12}$ unabhängig voneinander Wasserstoffatome, geradkettige oder

verzweigte Alkyl- oder Alkenylreste mit 1 bis 30 C-Atomen, Arylreste, wie beispielsweise Phenyl- oder Naphthylreste, Aralkylreste, wie beispielsweise Benzylreste, bedeuten, wobei die Aryl- oder Aralkylreste am aromatischen Kern durch Alkyl($C_1$-$C_{30}$)-, Alkoxy($C_1$-$C_{30}$)-, Hydroxylgruppen oder Halogenatome substituiert sein können, und sich zwei der Reste $R_9$ bis $R_{12}$ zu einem ein- oder mehrkernigen Ringsystem mit 4 bis 17 C-Atomen, das durch 1 bis 4 Heteroatome, wie beispielsweise Stickstoff-, Sauerstoff- oder Schwefelatome, unterbrochen sein und 2 bis 9 Doppelbindungen enthalten kann, sowie durch Fluor-, Chlor-, Brom- oder Jodatome, eine Alkyl($C_1$-$C_6$)-, Alkoxy($C_1$-$C_6$)-, Nitro- oder Aminogruppe substituiert sein kann ($R_{12}$ wird in diesem Fall zu einem der vorgenannten Reste am Ring), zusammenschließen können, und $Y^-$ ein organisches oder anorganisches Anion ist, wobei die Reste $R_9$ bis $R_{12}$ durch eine $COO^-$- oder $SO_3^-$-gruppe substituiert sein können und $Y^-$ in diesem Fall gegenstandslos wird, in homogen in Toner und Entwickler eingearbeiteter Form als farblose Ladungssteuermittel mit positiver oder negativer Steuerwirkung in besagten Tonern und Entwicklern für elektrophotographische Aufzeichnungsverfahren.

$X^-$ bzw. $Y^-$ als anorganisches oder organisches Anion kann beispielsweise sein $Hal^-$, wie beispielsweise $Cl^-$, $Br^-$ oder $J^-$, ferner $PF_6^-$, Sulfat, Phosphat, Cyanat, Thiocyanat, $BF_4^-$, $B(Aryl)_4^-$, wie beispielsweise Tetraphenylborat, p-Chlortetraphenylborat, p-Methyltetraphenylborat, Tetranaphthylborat, ferner Phenolat, Nitrophenolat, Zinktetracyanat, Zinktetrathiocyanat, $CH_3OSO_3^-$, gesättigtes oder ungesättigtes aliphatisches oder aromatisches Carboxylat oder Sulfonat, wie beispielsweise Acetat, Lactat, Benzoat, Salicylat, 2-Hydroxy-3-naphthoat, 2-Hydroxy-6-naphthoat, Ethylsulfonat, Phenylsulfonat, ferner perfluoriertes gesättigtes oder ungesättigtes aliphatisches oder aromatisches Carboxylat oder Sulfonat, wie beispielsweise Perfluoracetat, Perfluoralkylbenzoat, Perfluorethylsulfonat oder Perfluoralkylbenzolsulfonat.

Die Ammonium- und Immoniumverbindungen der vorstehend genannten allgemeinen Formel (I) bzw. (II) können für sich allein oder in Kombination in Tonern bzw. Entwicklern, die zum elektrophotographischen Kopieren bzw. Vervielfältigen von Vorlagen sowie zum Drucken von elektronisch, optisch oder magnetisch gespeicherten Informationen oder im Colorproofing eingesetzt werden. Darüberhinaus können diese Verbindungen für die Beschichtung von Carriern und in Pulvern und Lacken zur Oberflächenbeschichtung, insbesondere in elektrokinetisch versprühten Pulverlacken, als ladungsverbessernde Mittel verwendet werden.

Besonders geeignet sind Verbindungen der genannten allgemeinen Formel (I), in welcher mindestens einer der Reste $R_1$ bis $R_4$ einen geradkettigen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl- und/oder Chlormethyl- und/oder Carbonsäureamid- und/oder Urethan- und/oder Amino- und/oder $R_5$-O-$R_6$-Gruppen, worin $R_5$ und $R_6$ Alkyl-($C_1$-$C_{30}$)-reste darstellen, enthalten kann, und höchstens drei der Reste $R_1$ bis $R_4$ unabhängig voneinander Wasserstoffatome, geradkettige oder verzweigte Alkylreste mit 1 bis 18 C-Atomen, und $X^-$ ein organisches oder anorganisches Anion darstellen, wobei die Reste $R_1$ bis $R_4$ durch eine $COO^-$- oder $SO_3^-$-Gruppe substituiert sein können und X- in diesem Fall gegenstandslos wird.

Ferner sind besonders geeignet Verbindungen der genannten allgemeinen Formel (I), in welcher zwei der Reste $R_1$ bis $R_4$ sich zu einem ein- oder mehrkernigen Ringsystem mit 4 bis 10 C-Atomen, das durch 1 bis 4 Heteroatome, wie beispielsweise Stickstoff-, Sauerstoff- oder Schwefelatome unterbrochen sein und 0 bis 4 Doppelbindungen enthalten kann, sowie durch Fluor-, Chlor-, Brom- oder Jodatome, eine Alkyl($C_1$-$C_6$)-, Alkoxy($C_1$-$C_6$), Nitro- oder Aminogruppe substituiert sein kann, zusammenschließen können, und mindestens einer der Reste $R_1$ bis $R_4$ einen geradkettigen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl- und/oder Chlormethyl- und/oder Carbonsäureamid- und/oder Urethan- und/oder Amino- und/oder $R_5$-O-$R_6$-Gruppen, worin $R_5$ und $R_5$ Alkyl($C_1$-$C_{30}$)-Reste darstellen, enthalten kann, und höchstens einer der Reste $R_1$ bis $R_4$ ein Wasserstoffatom, einen geradkettigen oder verzweigten Alkylrest mit 1 bis 18 C-Atomen, und $X^-$ ein organisches oder anorganisches Anion bedeuten, wobei die Reste $R_1$ bis $R_4$ durch eine $COO^-$ oder $SO_3^-$-Gruppe substituiert sein können und $X^-$ in diesem Fall gegenstandslos wird.

Des weiteren eignen sich besonders Verbindungen der obengenannten allgemeinen Formel (II), in welcher mindestens einer der Reste $R_9$ bis $R_{12}$ einen geradkettigen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl und/oder Chlormethyl- und/oder Carbonsäureamid- und/oder Urethan- und/oder Amino- und/oder $R_5$-O-$R_5$-Gruppen, worin $R_5$ und $R_5$ Alkyl($C_1$-$C_{30}$)-Reste darstellen, enthalten kann, und höchstens drei der Reste $R_9$ bis $R_{12}$ unabhängig voneinander Wasserstoffatome, geradkettige oder verzweigte Alkylreste mit 1 bis 18 C-Atomen, und $Y^-$ ein organisches oder anorganisches Anion bedeuten, wobei die Reste $R_9$ und $R_{12}$ durch eine $COO^-$- oder $SO_3^-$-Gruppe substituiert sein können und $Y^-$ in diesem Fall gegenstandslos wird.

Es sind weiter geeignet Verbindungen der obengenannten allgemeinen Formel (II), in welcher zwei der Reste $R_9$ bis $R_{12}$ sich zu einem ein- oder mehrkernigen Ringsystem mit 4 bis 10 C-Atomen, das durch 1 bis 4 Heteroatome, wie beispielsweise Stickstoff-, Sauerstoff- oder Schwefelatome, unterbrochen sein und 2 bis 5

Doppelbindungen enthalten kann, sowie durch Fluor-, Chlor-, Brom- oder Jodatome, eine Alkyl($C_1$-$C_6$)-, Alkoxy($C_1$-$C_6$)-, Nitro- oder Aminogruppe substituiert sein kann ($R_{12}$ wird dabei zu einem der vorgenannten Substituenten am Ring), zusammenschließen können und einer der Reste $R_9$ bis $R_{12}$ einen geradkettigen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl- und/oder Chlormethyl- und/oder Carbonsäureamid- und/oder Urethan- und/oder Amino- und/oder $R_5$-O-$R_6$-Gruppen, worin $R_5$ und $R_5$ Alkyl-($C_1$-$C_{30}$)-Reste darstellen, enthalten kann, und $Y^-$ ein organisches oder anorganisches Anion darstellt, wobei die Reste $R_9$ bis $R_{12}$ durch eine $COO^-$- oder $SO_3^-$-Gruppe substituiert sein können und $Y^-$ in diesem Fall gegenstandslos wird.

Ganz besonders geeignet sind Verbindungen der obengenannten allgemeinen Formel (I), in welcher höchstens drei der Reste $R_1$ bis $R_4$ unabhängig voneinander eine Methyl-, Ethyl-, Stearyl-, 2-Hydroxyethyl- oder -$CH_2$-$CH_2$-$SO_3^-$-Gruppe ($X^-$ wird in letzterem Fall gegenstandslos) und mindestens einer der Reste $R_1$ bis $R_4$ eine der Gruppierungen

$Rf\text{-}CF{=}CH\text{-}CH_2\text{-}$ ($Rf = C_5F_{11}\text{-}C_{11}F_{23}$)

und

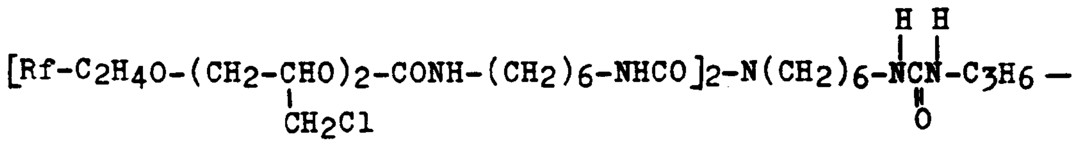

($Rf = C_8F_{17}\text{-}C_{16}F_{33}$) bedeuten, wobei sich zwei der Reste $R_1$ bis $R_4$ zu einem Pyrrolin-, Pyrrolidin-, Piperidin-, Morpholin- oder Indolinring zusammenschließen können, und $X^-$ $BF_4^-$, $Hal^-$, beispielsweise $Cl^-$, $Br^-$ oder $J^-$, ferner $CH_3$-O-$SO_3^-$, $B(Aryl)_4^-$, wie beispielsweise Tetraphenylborat, p-Chlortetraphenylborat, p-methyltetraphenylborat oder Tetranaphthylborat, darstellt.

Von den Verbindungen der genannten allgemeinen Formel (II) sind ganz besonders diejenigen geeignet, in denen mindestens einer der Reste $R_9$ bis $R_{12}$ einen fluorhaltigen Alkylrest mit 1 bis 14 C-Atomen und höchstens drei der Reste $R_9$ bis $R_{12}$ unabhängig voneinander Methyl-, Ethyl-, Stearyl-, 2-Hydroxyethyl- oder -$CH_2$-$CH_2$-$SO_3^-$-Gruppen ($Y^-$ wird in letzterem Fall gegenstandslos) darstellen, wobei sich zwei der Reste $R_9$ bis $R_{12}$ zu einem Pyridin-, Pyrazin- oder Chinolinring zusammenschließen können und $R_{12}$ dann ein Fluor-, Chlor-, Brom- oder Jodatom oder eine Alkyl($C_1$-$C_6$)-, Alkoxy($C_1$-$C_6$)-, Nitro- oder Aminogruppe am Ringsystem ist, und $X^-$ $BF_4^-$, $Hal^-$, wie beispielsweise $Cl^-$, $Br^-$ oder $J^-$, ferner $CH_3$-O-$SO_3^-$, $B(Aryl)_4^-$, wie beispielsweise Tetraphenylborat, Chlortetraphenylborat, p-Methyltetraphenylborat oder Tetranaphthylborat darstellt.

An Einzelverbindungen oder Verbindungsgemischen der genannten allgemeinen Formeln (I) und (II) seien beispielsweise folgende genannt:

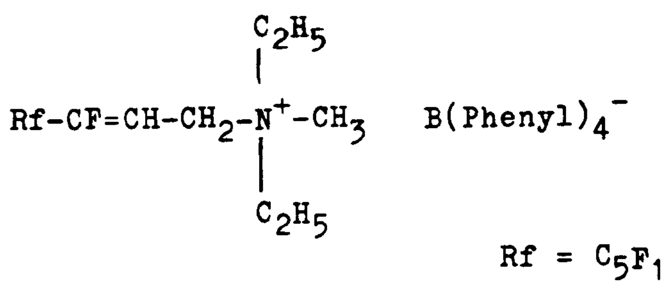

(1)

$Rf = C_5F_{11}\text{-}C_{11}F_{23}$

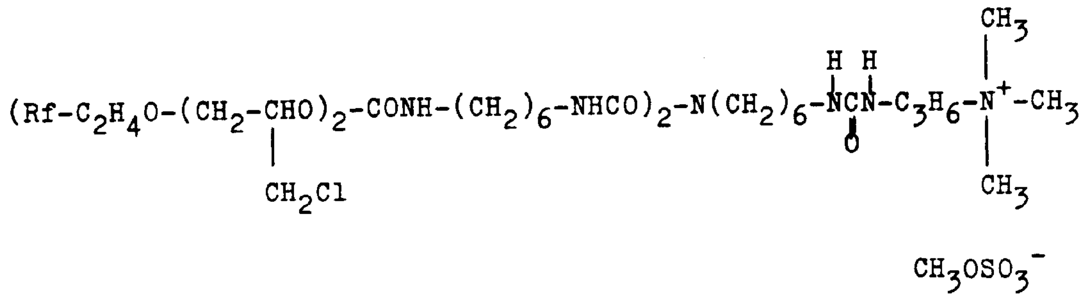

(2)

$Rf = C_8F_{17}-C_{16}F_{33}$

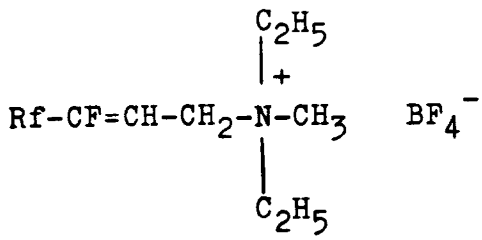

(3)

$Rf = C_5F_{11}-C_{11}F_{23}$

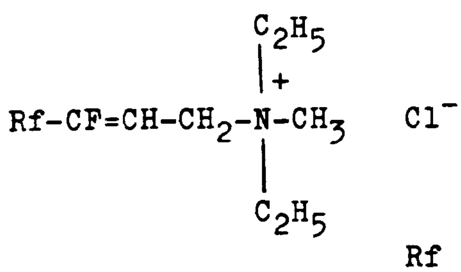

(4)

$Rf = C_5F_{11}-C_{11}F_{23}$

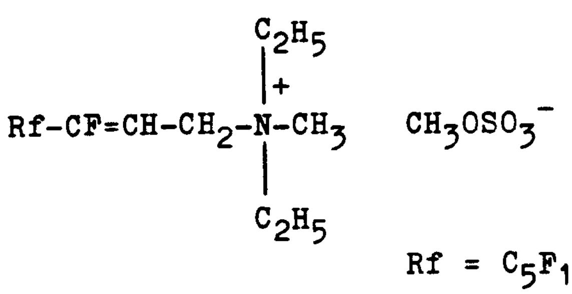

(5)

$Rf = C_5F_{11}-C_{11}F_{23}$

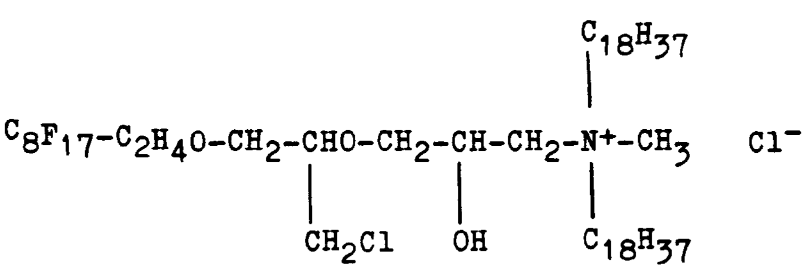

(6)

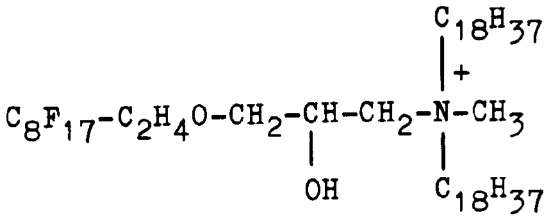 $CH_3OSO_3^-$ (7)

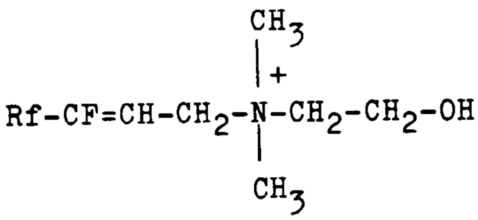 $Cl^-$ Rf= $C_3F_7-C_{16}F_{33}$ (8)

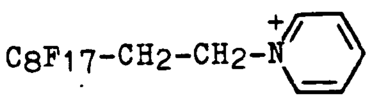 B(Phenyl)$_4^-$ (9)

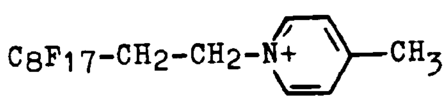 B(Phenyl)$_4^-$ (10)

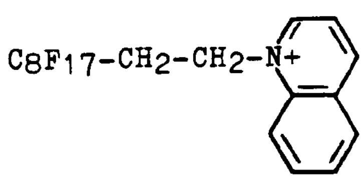 B(Phenyl)$_4^-$ (11)

So zeigt beispielsweise ein Toner mit 0,5 bzw. 1,0 Gewichtsprozent von Verbindung (1) eine Aufladung von -4,0 bzw. -21,7 µC/g nach 10 Minuten und von -16,6 bzw. -21 ,6 µC/g nach 24 Stunden Aktivierzeit (siehe Anwendungsbeispiele 1 und 2 der nachstehenden Anwendungsbeispiele).

Ein Toner mit 2,5 Gewichtsprozent der Verbindung (2) besitzt eine Aufladbarkeit von +6,0 µC/g nach 10 Minuten und von +44,6 µC/g nach 24 Stunden Aktivierzeit (Anwendungsbeispiel 3).
Ein Toner mit 1,0 Gewichtsprozent der Verbindung (3) zeigt eine Aufladbarkeit von +13,4 µC/g nach 10 Minuten und von +13,5 µC/g nach 24 Stunden Aktivierzeit (Anwendungsbeispiel 4).

Die Verbindungen der obengenannten allgemeinen Formeln (I) und (II) können auch aus geeigneten Medien, wie z.B. Lösungen, auf geeignete Trägermaterialien, wie z. B. Kieselgel, ALuminiumoxid, Titandioxid, aufgezogen werden. So zeigt ein Toner mit 3,0 Gewichtsprozent der Verbindung (5), aufgezogen auf Kieselgel, eine Aufladung von +9,7 µC/g nach 10 Minuten und von +16,2 µC/g nach 24 Stunden Aktivierzeit. Gegenüber der freien Verbindung (5), deren Wirkung im Toner bei hoher Luftfeuchte zusammenbricht, wird damit durch das Aufziehen auf Kieselgel eine ausgezeichnete Wirksamkeit der Verbindung (5) auch bei hoher Luftfeuchte erzielt (Anwendungsbeispiel 6).

Von Pigmenten in Tonern ist, wie oben bereits geschildert, bekannt, daß sie die elektrostatische Aufladung des Toners sehr stark beeinflussen können. Als Beispiele seien hier die Farbmittel C.I. Pigment Red 57:1 und C.I. Solvent Blue 125 genannt. C.I. Pigment Red 57:1 verleiht einem Toner eine hohe negative Aufladung mit

starker Drift zu weiter steigender negativer Aufladung bei längerer Aktivierzeit. C.I. Solvent Blue 125 bewirkt in einem Toner eine hohe positive Aufladung, die bei längerer Aktivierzeit in einer starken Drift auf fast Null abfällt. Um so erstaunlicher ist, daß bei Einarbeitung von 5 Gewichtsprozent des Farbmittels C.I. Pigment Red 57:1 oder C.I. Solvent Blue 125 zusammen mit einem Gewichtsprozent der Verbindung (1) in einen Toner, der triboelektrische Eigeneffekt dieser Farbmittel durch die hohe Wirksamkeit der Verbindung(1) voll kompensiert und die gewünschte Tonerladung eingestellt wird (Anwendungsbeispiel 7 bis 10).

Setzt man statt einer erfindungsgemäßen Verbindung andere Ammonium- oder Immoniumverbindungen ein, so zeigen die entsprechenden Toner eine viel geringere Aufladung und zum Teil Ladungsumkehr nach längerer Aktivierzeit. (Vergleichsbeispiele 1 und 2).

Die erfindungsgemäßen Verbindungen werden in der Regel in einer Konzentration von etwa 0,01 bis etwa 10 Gew.-%, vorzugsweise etwa 0,1 bis etwa 5,0 Gew.-%, in das jeweilige Trägermaterial in bekannter Weise, z. B. durch Einkneten oder Extrudieren, homogen eingearbeitet. Dabei können die Ladungssteuermittel als getrocknete oder gemahlene Pulver, Dispersionen oder Lösungen, Preßkuchen, Masterbatch, als auf geeignete Träger aus wäßriger oder nichtwäßriger Lösung aufgezogene Verbindungen oder in sonstiger geeigneter Form zugegeben werden. Ebenso können die erfindungsgemäßen Verbindungen grundsätzlich auch schon bei der Herstellung der jeweiligen Tonerbindemittel zugegeben werden, d. h. im Verlauf von deren Polymerisation oder Polykondensation. Typische Tonerbindemittel sind beispielsweise Styrol-, Styrolacrylat-, Styrolbutadien-, Acrylat-, Polyester-, Amid-, Amin-, Ammonium-, Ethylen-, Phenol- oder Epoxidharze, einzeln oder in Kombination, die noch weitere Inhaltsstoffe wie Pigmente, Wachse oder Fließhilfsmittel enthalten können bzw. im Nachhinein zugesetzt bekommen können.

Die Höhe der elektrostatischen Aufladung der elektrophotographischen Toner, in welche die erfindungsgemäß beanspruchten Ladungssteuermittel homogen eingearbeitet wurden, wurde an Standardtestsystemen unter gleichen Bedingungen (wie gleiche Dispergierzeiten, gleiche Teilchengrößenverteilung, gleiche Teilchenform) bei Raumtemperatur und 50 % relativer Luftfeuchte sowie bei Raumtemperatur und 92 % relativer Luftfeuchte gemessen. Für die Messung bei 92 % relativer Luftfeuchte wurde der jeweilige Toner 48 Stunden in einer Klimakammer konditioniert.

Die Aktivierung des Toners in einem Zweikomponentenentwickler erfolgte durch Verwirbelung mit einem Carrier (3 Gewichtsteile Toner auf 97 Gewichtsteile Carrier) auf einer Rollbank (150 Umdrehungen pro Minute). Anschließend wurde an einem Q/M-Meßstand die elektrostatische Aufladung gemessen (vgl. J. H. Dessauer, H. E. Clark, "Xerography and related Processes", Focus Press, N. Y. 1965, Seite 289).

Bei der Bestimmung des Q/M-Wertes ist die Teilchengröße von großem Einfluß, weshalb bei den durch Sichtung erhaltenen Tonerproben streng auf einheitliche Teilchengrößenverteilung geachtet wurde.

Die nachstehenden Beispiele dienen zur Erläuterung der Erfindung, ohne diese darauf zu beschränken. Die angegebenen Teile bedeuten Gewichtsteile.

**Herstellungsbeispiel 1**

Zu 40 ml einer 0,5 molaren wäßrigen Lösung (0,020 Mol) des Verbindungsgemisches der weiter oben genannten Formel (5) (Molekulargewicht 672) werden 160 ml Wasser gegeben und dann über einen Zeitraum von 15 bis 20 Minuten 22 ml einer 1,0 M wäßrigen Lösung von Natriumtetraphenylborat (0,022 Mol) unter kräftigem Rühren zugetropft. Es wird mit Wasser auf 500 ml aufgefüllt, auf 50°C erwärmt und der dicke weiße Niederschlag heiß abgesaugt. Das Produkt wird mit Wasser gründlich gewaschen und bei 50°C im Umluftschrank getrocknet.

| | |
|---|---|
| Ausbeute: | 16,9 g (96,0 % d.Th.) der Verbindung (1) |
| Molekulargewicht: | 880 |
| Schmelzpunkt: | 154-156°C |
| Elementaranalyse: | ber. 4,1 % H, 1,6 % N, 1,2 % B |
| | gef.4,1% H,1,6 % N, 1,1 % B,0,05% Wasser |
| 1H-NMR (in DMSO-d6): | 1,20 (Triplett, 6 Methyl-H), 2,97 (Singulett, 3 Methyl-H), 3,30 (Quartett, 4 Ethyl-H), 4,25 (Dublett, 2 Allyl-H), 6,61 (Dublett von Tripletts, 1 Vinyl-H), 7,01 (Multiplett, 20 Phenyl-H) ppm. |

**Herstellungsbeispiel 2**

Die Herstellung der Verbindung (3) erfolgt analog Herstellungsbeispiel (1) unter Verwendung von Natriumtetrafluoroborat.

| | |
|---|---|
| Ausbeute: | 12,3 g (95,0 % d.Th.) der Verbindung (3) |
| Molekulargewicht: | 648 |

| | |
|---|---|
| Schmelzpunkt: | 202°C |
| Elementaranalyse: | ber. 2,5 % H, 2,2 % N, 1,7 % B |
| | gef. 2,7 % H, 2,3 % N, 1,8 % B, 0,5 % Wasser |
| 1H-NMR (in DMSO-d6): | 1,24 (Triplett, 6 Methyl-H),3,02 (Singulett, 3 Methyl-H), 3,37 (Quartett, 4 Ethyl-H), 4,28 (Dublett, 2 Allyl-H), 6,63 (Dublett von Tripletts, 1 Vinyl-H) ppm. |

**Herstellungsbeispiel 3**

Die Herstellung der Verbindung (9) erfolgte analog Herstellungsbeispiel (1) unter Verwendung des entsprechenden Perfluoralkylpyridiniumjodids und von Natriumtetraphenylborat sowie Isoporopanol/Wasser (1:1 Volumenteile) als Lösungsmittel.

| | |
|---|---|
| Ausbeute: | 15,2 g (89,7 % d.Th.) der Verbindung (9) |
| Molekulargewicht: | 845 |
| Schmelzpunkt: | 163°C |
| Elementaranalyse: | ber. 55,4 % C,3,5 % H,1,7 % N,1,3 % B 38,2 % F |
| | gef. 55,2 % C,3,3 % H,1,6 % N,1,2 % B, 36,8 % F,0,19 % Wasser |
| 1H-NMR (in DMSO-d6): | 3,25 (Multiplett, 2-Methylen-H), 4,97 (Triplett, 2-Methylen-H), 6,95 (Multiplett, 20 Phenyl-H), 8,62 (Multiplett, 5-Pyridyl-H) ppm. |

**Herstellungsbeispiel 4**

20 g einer 50 %igen wäßrigen Lösung der Verbindung (5) werden zu 20 g Kieselgel ("Sipernat 22", Firma DEGUSSA) gegeben und in einem Mixer innig vermischt. Man erhält ein feines, trockenes und gut rieselfähiges Pulver mit 25 Gewichtsprozent der Verbindung (5).

Die Verbindungen (2) sowie (4) bis (8) wurden analog US-PS 3 535 381, FR-PS 2 153 489, DE-OS 1 922 277, DE-OS 2 244 297, DE-OS 3 606 933 und BE-PS 788 335, das entsprechende Jodid als Ausgangsverbindung für die Verbindungen (9) bis (11) analog DE-OS 1 922 277 hergestellt.

**Anwendungsbeispiel 1**

0,5 Teile der Verbindung (1) wurden mittels eines Kneters der Firma Werner & Pfleiderer (Stuttgart) 45 Minuten in 99,5 Teilen Tonerbindemittel (Dialec S 309 der Firma Diamond Shamrock, Styrol-Methacrylat-Copolymerisat 60:40) homogen eingearbeitet. Anschließend wurde auf der Laboruniversalmühle 100 LU (Firma Alpine, Augsburg) gemahlen und dann auf dem Zentrifugalsichter 100 MZR (Firma Alpine) klassifiziert. Die gewünschte Teilchenfraktion (4 - 25 µm) wurde mit einem Carrier aus mit Styrol-Methacrylat-Copolymerisat 90:10 beschichteten Magnetitteilchen der Größe 50 bis 200 µm des Typs 90 um Xerographic Carrier der Firma Plasma Materials Inc. aktiviert. Die Messung erfolgte an einem üblichen Q/M-Meßstand (Firma Epping GmbH, Neufahrn); durch Verwenden eines Siebes mit einer Maschenweite von 25 µm (Firma Gebr. Kufferath, Düren) wurde sichergestellt, daß bei den Tonerausblasungen kein Carrier mitgerissen werden konnte. In Abhängigkeit von der Aktivierdauer wurden folgende Q/M-Werte (µC/g) gemessen:

| | Q/M (µC/g) | |
|---|---|---|
| Aktivierdauer | 50 % rel. Luftfeuchte | 92 % |
| 10 Min. | -4,0 | -0,6 |
| 30 Min. | -6,8 | -4,1 |
| 2 Std. | -10,1 | -9,7 |
| 24 Std. | -16,6 | -16,5 |

**Anwendungsbeispiel 2**

Es wurde, wie in Anwendungsbeispiel 1 beschrieben, gearbeitet, mit dem Unterschied, daß 1,0 Teil der

Verbindung (1) in 99 Teilen Tonerbindemittel eingesetzt wurde.

| Aktivierdauer | Q/M (μC/g) 50 % rel. Luftfeuchte | Q/M (μC/g) 92 % rel. Luftfeuchte |
|---|---|---|
| 10 Min. | -21,7 | -16,3 |
| 30 Min. | -22,5 | -20,1 |
| 2 Std. | -22,9 | -20,9 |
| 24 Std. | -21,6 | -19,0 |

**Anwendungsbeispiel 3**

Es wurde, wie in Anwendungsbeispiel 1 beschrieben, gearbeitet, mit dem Unterschied, daß 2,5 Teile der Verbindung (2) in 95 Teilen Tonerbindemittel eingesetzt wurden.

| Aktivierdauer | Q/M (μC/g) 50 % rel. Luftfeuchte | Q/M (μC/g) 92 % rel. Luftfeuchte |
|---|---|---|
| 10 Min. | +6,0 | +3,0 |
| 30 Min. | +9,6 | +3,0 |
| 2 Std. | +23,6 | +1,3 |
| 24 Std. | +44,6 | +18,3 |

**Anwendungsbeispiel 4**

Es wurde, wie in Anwendungsbeispiel 1 beschrieben, gearbeitet, mit dem Unterschied, daß 1,0 Teil der Verbindung (3) in 99 Teilen Tonerbindemittel eingesetzt wurde.

| Aktivierdauer | Q/M (μC/g) 50 % rel. Luftfeuchte | Q/M (μC/g) 92 % rel. Luftfeuchte |
|---|---|---|
| 10 Min. | +13,4 | +11,9 |
| 30 Min. | +16,9 | +15,7 |
| 2 Std. | +17,5 | +16,4 |
| 24 Std. | +13,5 | +15,9 |

**Anwendungsbeispiel 5**

Es wurde, wie in Anwendungsbeispiel 1 beschrieben, gearbeitet, mit dem Unterschied, daß 1,0 Teil der Verbindung (4) in 99 Teilen Tonerbindemittel eingesetzt wurde.

| Aktivierdauer | Q/M (µC/g) 50 % rel. Luftfeuchte | 92 % |
|---|---|---|
| 10 Min. | +12,8 | +13,0 |
| 30 Min. | +15,5 | +14,9 |
| 2 Std. | +17,1 | +17,1 |
| 24 Std. | +16,8 | +18,3 |

**Anwendungsbeispiel 6**

Es wurde, wie in Anwendungsbeispiel 1 beschrieben, gearbeitet, mit dem Unterschied, daß 3,0 Teile der Verbindung (5) (in Form von 25 Gewichtsprozent (5) auf Kieselgel ("Sipernat 22", Firma DEGUSSA) in 91 Teilen Tonerbindemittel und 6 Teilen Kieselgel eingesetzt wurden.

| Aktivierdauer | Q/M (µC/g) 50 % rel. Luftfeuchte | 92 % |
|---|---|---|
| 10 Min. | +9,7 | +12,0 |
| 30 Min. | +11,9 | +13,2 |
| 2 Std. | +14,1 | +13,9 |
| 24 Std. | +16,2 | +15,7 |

**Anwendungsbeispiel 7**

Es wurden 5,0 Teile des Farbmittels C.I. Pigment Red 57:1 in 95 Teilen Tonerbindemittel, wie in Anwendungsbeispiel 1 beschrieben, homogen eingearbeitet.

| Aktivierdauer | Q/M (µC/g) 50 % rel. Luftfeuchte |
|---|---|
| 10 Min. | -3,4 |
| 30 Min. | -19,5 |
| 2 Std. | -52,4 |
| 24 Std. | -63,9 |

**Anwendungsbeispiel 8**

Es wurden 5,0 Teile des Farbmittels C.I. Solvent Blue 125 in 95 Teilen Tonerbindemittel, wie in Anwendungsbeispiel 1 beschrieben, homogen eingearbeitet.

| Aktivierdauer | Q/M (µC/g) 50 % rel. Luftfeuchte |
|---|---|
| 10 Min. | +27,9 |
| 30 Min. | +19,2 |
| 2 Std. | +7,5 |
| 24 Std. | +9,0 |

**Anwendungsbeispiel 9**

Es wurden 1,0 Teil der Verbindung (1) und 5,0 Teile C.I. Pigment Red 57:1 in 94 Teilen Tonerbindemittel, wie in Anwendungsbeispiel 1 beschrieben, homogen eingearbeitet.

| Aktivierdauer | Q/M (µC/g) 50 % rel. Luftfeuchte | 92 % |
|---|---|---|
| 10 Min. | -19,6 | -7,3 |
| 30 Min. | -22,1 | -12,6 |
| 2 Std. | -26,3 | -17,1 |
| 24 Std. | -23,3 | -15,0 |

**Anwendungsbeispiel 10**

Es wurden 1,0 Teil der Verbindung (1) und 5,0 Teile C.I. Solvent Blue 125 in 94 Teilen Tonerbindemittel, wie in Anwendungsbeispiel 1 beschrieben, homogen eingearbeitet.

| Aktivierdauer | Q/M (µC/g) 50 % rel. Luftfeuchte | 92 % |
|---|---|---|
| 10 Min. | -3,5 | +0,7 |
| 30 Min. | -7,7 | -2,0 |
| 2 Std. | -8,7 | -5,3 |
| 24 Std. | -14,4 | -10,0 |

**Anwendungsbeispiel 11**

Es wurde, wie in Anwendungsbeispiel 1 beschrieben, gearbeitet, mit dem Unterschied, daß 1,0 Teil der Verbindung (9) in 99 Teilen Tonerbindemittel homogen eingearbeitet wurde.

| Aktivierdauer | Q/M (µC/g) 50 % rel. Luftfeuchte | 92 % |
|---|---|---|
| 10 Min. | -11,8 | +3,7 |
| 30 Min. | -11,0 | -5,9 |
| 2 Std. | -11,7 | -4,4 |
| 24 Std. | -14,7 | -8,0 |

**Vergleichsbeispiel 1**

Es wurde, wie in Anwendungsbeispiel 1 beschrieben, gearbeitet, mit dem Unterschied, daß 1,0 Teil Cetylpyridiniumchlorid in 99 Teilen Tonerbindemittel homogen eingearbeitet wurde.

| Aktivierdauer | Q/M (µC/g) 50 % rel. Luftfeuchte |
|---|---|
| 10 Min. | +12,6 |
| 30 Min. | +7,6 |
| 2 Std. | +0,9 |
| 24 Std. | -9,7 |

**Vergleichsbeispiel 2**

Es wurde, wie in Anwendungsbeispiel 1 beschrieben, gearbeitet, mit dem Unterschied, daß 1,0 Teil Benyzltrimethylammoniumchlorid in 99 Teilen Tonerbindemittel eingesetzt wurde.

| Aktivierdauer | Q/M (µC/g) 50 % rel. Luftfeuchte |
|---|---|
| 10 Min. | +2,7 |
| 30 Min. | -0,4 |
| 2 Std. | -1,5 |
| 24 Std. | -4,6 |

**Patentansprüche**

1. Verwendung hochgradig fluorierter Ammoniumverbindungen der allgemeinen Formel (I)

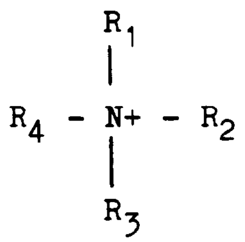

$X^-$ (I),

in welcher $R_1$ bis $R_4$ Wasserstoffatome oder organische Reste bedeuten, wobei mindestens einer der Reste $R_1$ bis $R_4$ einen geradkettigen oder verzweigten fluorhaltigen Alkyl- oder fluorhaltigen Alkenylrest mit 1 bis 69 C-Atomen und 3 bis 66 F-Atomen, welcher Hydroxyl- und/oder Chlormethyl- und/oder Carbonsäureamid- und/oder Sulfonsäureamid- und/oder Urethan- und/oder Amino- und/oder $R_5$-O-$R_6$- und/oder $R_7$-C(O)-O-$R_8$-Gruppen, worin $R_5$, $R_6$, $R_7$ und $R_8$ Alkyl($C_1$-$C_{30}$)-reste darstellen, enthalten kann, und höchstens drei der Reste $R_1$ bis $R_4$ unabhängig voneinander Wasserstoffatome, geradkettige oder verzweigte Alkyl- oder Alkenylreste mit 1 bis 30 C-Atomen, Aryl- oder Aralkylreste, die durch Alkyl($C_1$-$C_{30}$)-, Alkoxy($C_1$-$C_{30}$)- oder Hydroxylgruppen oder Halogenatome substituiert sein können, darstellen, wobei sich zwei der Reste $R_1$ bis $R_4$ zu einem ein- oder mehrkernigen Ringsystem mit 4 bis 12 C-Atomen, das durch 1 bis 4 Heteroatome unterbrochen sein und 0 bis 6 Doppelbindungen enthalten kann, sowie durch Fluor-, Chlor-, Brom- oder Jodatome, Alkyl($C_1$-$C_6$)-, Alkoxy($C_1$-$C_6$)-, Nitro- oder Aminogruppen substituiert sein kann, zusammenschließen können, und $X^-$ ein organisches oder anorganisches Anion bedeutet, wobei die Reste $R_1$ bis $R_4$ durch eine $COO^-$ oder $SO_3^-$-Gruppe substituiert sein können und $X^-$ in diesem Fall gegenstandslos wird, sowie hochgradig fluorierter Immoniumverbindungen der allgemeinen Formel (II)

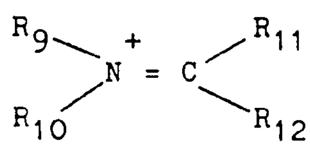

$Y^-$ (II),

in welcher $R_9$ bis $R_{12}$ Wasserstoffatome oder organische Reste bedeuten, wobei mindestens einer der Reste $R_9$ bis $R_{12}$ einen geradkettigen oder verzweigten fluorhaltigen Alkyl- oder fluorhaltigen Alkenylrest mit 1 bis 69 C-Atomen und 3 bis 66 F-Atomen bedeutet, welcher Hydroxyl- und/oder Chlormethyl- und/oder Carbonsäureamid- und/oder Sulfonsäureamid- und/oder Urethan- und/oder Amino- und/oder $R_5$-O-$R_8$- und/oder $R_7$C(O)-O-$R_8$-Gruppen, worin $R_5$, $R_8$, $R_7$ und $R_8$ die vorstehend genannten Bedeutungen haben, enthalten kann, und höchstens drei der Reste $R_9$ bis $R_{12}$ unabhängig voneinander Wasserstoffatome, geradkettige oder verzweigte Alkyl- oder Alkenylreste mit 1 bis 30 C-Atomen, Aryl- oder Aralkylreste bedeuten, wobei die Aryl- oder Aralkylreste am aromatischen Kern durch Alkyl($C_1$-$C_{30}$)-, Alkoxy($C_1$-$C_{30}$)-, Hydroxylgruppen oder Halogenatome substituiert sein können, und sich zwei der Reste $R_9$ bis $R_{12}$ zu einem ein- oder mehrkernigen Ringsystem mit 4 bis 17 C-Atomen, das durch 1 bis 4 Heteroatome unterbrochen sein und 2 bis 9 Doppelbindungen enthalten kann, sowie durch Fluor-, Chlor-, Brom- oder Jodatome, Alkyl($C_1$-$C_6$)-, Alkoxy($C_1$-$C_6$)-, Nitro- oder Aminogruppen substituiert sein kann, zusammenschließen können, und $Y^-$ ein organisches oder anorganisches Anion ist, wobei die Reste $R_9$ bis $R_{12}$ durch eine $COO^-$- oder $SO_3^-$-Gruppe substituiert sein können und $Y^-$ in diesem Fall gegenstandslos wird, in homogen in Toner und Entwickler eingearbeiteter Form als farblose Ladungssteuermittel mit positiver oder negativer Steuerwirkung in besagten Tonern und Entwicklern für elektrophotographische Aufzeichnungsverfahren.

2. Verwendung hochgradig fluorierter Ammoniumverbindungen gemäß Anspruch 1, dadurch gekennzeichnet, daß in der in Anspruch 1 genannten allgemeinen Formel (I) mindestens einer der Reste $R_1$ bis $R_4$ einen geradkettigen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl- und/oder Chlormethyl- und/oder Carbonsäureamid- und/oder Urethan- und/oder Amino- und/oder $R_5$-O-$R_8$-Gruppen, worin $R_8$ und $R_8$ Alkyl($C_1$-$C_{30}$)-reste darstellen, enthalten kann, und höchstens drei der Reste $R_1$ bis $R_4$ unabhängig voneinander Wasserstoffatome, geradkettige oder verzweigte Alkylreste mit 1 bis 18 C-Atomen, und $X^-$ ein organisches oder anorganisches Anion darstellen, wobei die Reste $R_1$ bis $R_4$ durch eine $COO^-$- oder $SO_3^-$-Gruppe substituiert sein können und $X^-$ in diesem Fall gegenstandslos wird.

3. Verwendung hochgradig fluorierter Ammoniumverbindungen gemäß Anspruch 1, dadurch gekennzeichnet, daß in der in Anspruch 1 genannten allgemeinen Formel (I) zwei der Reste $R_1$ bis $R_4$ ein ein- oder mehrkerniges Ringsystem mit 4 bis 10 C-Atomen, das durch 1 bis 4 Heteroatome unterbrochen sein und 0 bis 4 Doppelbindungen enthalten kann, sowie durch Fluor-, Chlor-, Brom- oder Jodatome, Alkyl($C_1$-$C_6$)-, Alkoxy($C_1$-$C_6$), Nitro- oder Aminogruppen substituiert sein kann, bilden, und mindestens einer der Reste $R_1$ bis $R_4$ einen geradkettigen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl- und/oder Chlormethyl- und/oder Carbonsäureamid- und/oder Urethan- und/oder Amino- und/oder $R_5$-O-$R_6$-Gruppen, worin $R_5$ und $R_6$ Alkyl($C_1$-$C_{30}$)-Reste darstellen, enthalten kann, und höchstens einer der Reste $R_1$ bis $R_4$ ein Wasserstoffatom, einen geradkettigen oder verzweigten Alkylrest mit 1 bis 18 C-Atomen und $X^-$ ein organisches oder anorganisches Anion bedeuten, wobei die Reste $R_1$ bis $R_4$ durch eine $COO^-$ oder $SO_3^-$-Gruppe substituiert sein können und $X^-$ in diesem Fall gegenstandslos wird.

4. Verwendung hochgradig fluorierter Immoniumverbindungen gemäß Anspruch 1, dadurch gekennzeichnet, daß in der in Anspruch 1 genannten allgemeinen Formel (II) mindestens einer der Reste $R_9$ bis $R_{12}$ einen geradkettigen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl und/oder Chlormethyl- und/oder Carbonsäureamid- und/oder Urethan- und/oder Amino- und/oder $R_5$-O-$R_6$-Gruppen, worin $R_5$ und $R_6$ Alkyl($C_1$-$C_{30}$)-Reste darstellen, enthalten kann, und höchstens drei der Reste $R_9$ bis $R_{12}$ unabhängig voneinander Wasserstoffatome, geradkettige oder verzweigte Alkylreste mit 1 bis 18 C-Atomen, und $Y^-$ ein organisches oder anorganisches Anion bedeuten, wobei die Reste $R_9$ und $R_{12}$ durch eine $COO^-$- oder $SO_3^-$-Gruppe substituiert sein können und $Y^-$ in diesem Fall gegenstandslos wird.

5. Verwendung hochgradig fluorierter Immoniumverbindungen gemäß Anspruch 1, dadurch gekennzeichnet, daß in der in Anspruch 1 genannten allgemeinen Formel (II) zwei der Reste $R_9$ bis $R_{12}$ ein ein- oder mehrkerniges Ringsystem mit 4 bis 10 C-Atomen, das durch 1 bis 4 Heteroatome aus der Reihe Stickstoff, Schwefel oder Sauerstoff unterbrochen sein und 2 bis 5 Doppelbindungen enthalten kann, und durch Fluor-, Chlor-, Brom- oder Jodatome, Alkyl($C_1$-$C_6$)-, Alkoxy($C_1$-$C_6$)-, Nitro- oder Aminogruppen substituiert sein kann, bilden und mindestens einer der Reste $R_9$ bis $R_{12}$ einen fluorhaltigen Alkenylrest mit 4 bis 14 C-Atomen oder einen geradkettigen oder verzweigten fluorhaltigen Alkylrest mit 13 bis 69 C-Atomen bedeutet, welcher Hydroxyl- und/oder Chlormethyl- und/oder Carbonsäureamid- und/oder Urethan- und/oder Amino- und/oder $R_5$-O-$R_6$-Gruppen, worin $R_6$ und $R_6$ Alkyl($C_1$-$C_{30}$)-Reste darstellen, enthalten kann, und $Y^-$ ein organisches oder anorganisches Anion darstellt, wobei die Reste $R_9$ bis $R_{12}$ durch eine $COO^-$-oder $SO_3^-$-Gruppe substituiert sein können und $Y^-$ in diesem Fall gegenstandslos wird.

6. Verwendung hochgradig fluorhaltiger Ammonium- oder Immoniumverbindungen gemäß Anspruch 1, dadurch gekennzeichnet, daß in den dort genannten allgemeinen Formeln (I) und (II) $X^-$ und $Y^-$ $Cl^-$, $Br^-$, $J^-$, $PF_6^-$, Sulfat, Phosphat, Cyanat, Thiocyanat, $BF_4^-$, Tetraphenylborat, p-Chlortetraphenylborat, p-Methyltetraphenylborat. Tetranaphthylborat, Phenolat, Nitrophenolat, Zinktetracyanat, Zinktetrathiocyanat, $CH_3OSO_3^-$, gesättigtes oder ungesättigtes aliphatisches oder aromatisches Carboxylat oder Sulfonat, perfluoriertes gesättigtes oder ungesättigtes aliphatisches oder aromatisches Carboxylat oder Sulfonat bedeuten.

7. Verwendung hochgradig fluorierter Ammoniumverbindungen gemäß Anspruch 1, dadurch gekennzeichnet, daß in der in Anspruch 1 genannten allgemeinen Formel (1) höchstens drei der Reste $R_1$ bis $R_4$ unabhängig voneinander eine Methyl-, Ethyl-, Stearyl-, 2-Hydroxyethyl- oder $-CH_2-CH_2-SO_3^-$-Gruppe ($X^-$ wird in letzterem Fall gegenstandslos) und mindestens einer der Reste $R_1$ bis $R_4$ eine der Gruppierungen

$$Rf\text{-}CF{=}CH\text{-}CH_2\text{-} \qquad (Rf = C_5F_{11}\text{-}C_{11}F_{23})$$

und

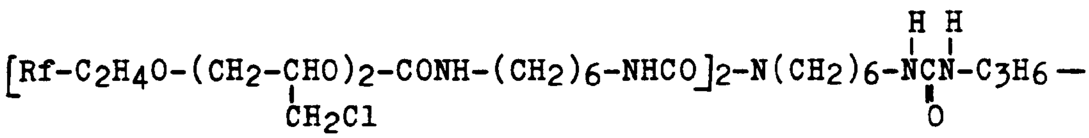

$(Rf = C_8F_{17}\text{-}C_{16}F_{33})$

bedeuten, wobei zwei der Reste $R_1$ bis $R_4$ einen Pyrrolin-, Pyrrolidin-, Piperidin-, Morpholin- oder Indolinring bilden können, und $X^-$ $BF_4^-$, $Cl^-$, $Br^-$, $J^-$, $CH_3$-O-$SO_3^-$, Tetraphenylborat, p-Chlortetraphenylborat, p-Methyltetraphenylborat oder Tetranaphthylborat darstellt.

**8.** Verwendung hochgradig fluorierter Immoniumverbindungen gemäß Anspruch 1, dadurch gekennzeichnet, daß in der in Anspruch 1 genannten allgemeinen Formel (II) mindestens einer der Reste $R_9$ bis $R_{12}$ einen fluorhaltigen Alkylrest mit 1 bis 14 C-Atomen, und höchstens drei der Reste $R_9$ bis $R_{12}$ unabhängig voneinander Methyl-, Ethyl-, Stearyl-, 2-Hydroxyethyl- oder -$CH_2$-$CH_2$-$SO_3^-$-Gruppen (Y wird in letzterem Fall gegenstandslos) darstellen, wobei zwei der Reste $R_9$ bis $R_{12}$ einen Pyridin-, Pyrazin- oder Chinolinring bilden können und $R_{12}$ dann ein Fluor-, Chlor-, Brom- oder Jodatom oder eine Alkyl($C_1$-$C_6$)-, Alkoxy($C_1$-$C_6$), Nitro- oder Aminogruppe am Ringsystem ist, und $X^-$ $BF_4^-$, $Cl^-$, $Br^-$, $J^-$, $CH_3$-O-$SO_3^-$, Tetraphenylborat, Chlortetraphenylborat, p-Methyltetraphenylborat oder Tetranaphthylborat darstellt.

**9.** Verwendung von in mindestens einem der Ansprüche 1 bis 8 genannten Ammonium- oder Immoniumverbindungen, einzeln oder in Kombination, zur Herstellung von Tonern oder Entwicklern, die zum elektrophotographischen Kopieren oder Vervielfältigen von Vorlagen sowie zum Drucken von elektronisch, optisch oder magnetisch gespeicherten Informationen oder im Colorproofing eingesetzt werden.

**10.** Verwendung von in mindestens einem der Ansprüche 1 bis 8 genannten Ammonium- oder Immoniumverbindungen, dadurch gekennzeichnet, daß man die Ammonium- oder Immoniumverbindungen, einzeln oder in Kombination, in einer Konzentration von etwa 0,01 bis etwa 10 Gewichtsprozent einsetzt.

**11.** Verwendung von in mindestens einem der Ansprüche 1 bis 8 genannten Ammonium- oder Immoniumverbindungen, einzeln oder in Kombination, in homogener Mischung mit einem Tonerbindemittel zum Beschichten von Carriern, die in Entwicklern zum elektrophotographischen Kopieren oder Vervielfältigen von Vorlagen sowie zum Drucken von elektronisch, optisch oder magnetisch gespeicherten Informationen oder im Colorproofing eingesetzt werden.

**12.** Verwendung von in mindestens einem der Ansprüche 1 bis 8 genannten Ammonium- oder Immoniumverbindungen, einzeln oder in Kombination, als ladungsverbesserndes Mittel in Pulvern und Lacken zur Oberflächenbeschichtung von Gegenständen aus Metall, Holz, Kunststoff, Glas, Keramik, Beton, Textilmaterial, Papier oder Kautschuk, insbesondere in elektrokinetisch versprühten Pulverlacken.

## Claims

**1.** The use of highly fluorinated ammonium compounds of the formula (I)

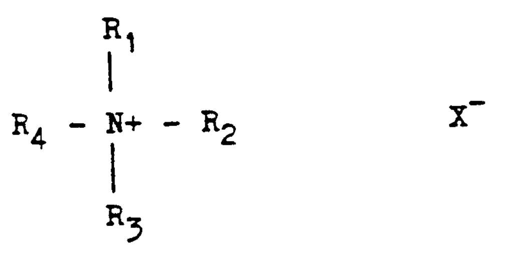

(I),

in which $R_1$ to $R_4$ denote hydrogen atoms or organic radicals, at least one of the radicals $R_1$ to $R_4$ denoting a straight-chain or branched fluorine-containing alkyl radical or fluorine-containing alkenyl radical which contains 1 to 69 carbon atoms and 3 to 66 fluorine atoms and which may contain hydroxyl and/or chloromethyl and/or carboxamide and/or sulfonamide and/or urethane and/or amino and/or $R_5$-O-$R_6$ and/or $R_7$-C(O)-O-$R_8$ groups in which $R_5$, $R_6$, $R_7$ and $R_8$ are ($C_1$-$C_{30}$)alkyl radicals and at most three of the radicals $R_1$ to $R_4$ are, independently of one another, hydrogen atoms, straight-chain or branched alkyl radicals or alkenyl radicals containing 1 to 30 carbon atoms, aryl radicals or aralkyl radicals which may be substituted by ($C_1$-$C_{30}$)alkyl, ($C_1$-$C_{30}$)alkoxy or hydroxyl groups or halogen atoms, it being possible for two of the radicals $R_1$ to $R_4$ to join together to form a mono- or polycyclic ring system containing 4 to 12 carbon atoms which may be interrupted by 1 to 4 heteroatoms and may contain 0 to 6 double bonds and also be substituted by fluorine, chlorine, bromine or iodine atoms, ($C_1$-$C_6$)alkyl, ($C_1$-$C_6$)alkoxy, nitro or amino groups, and $X^-$ denotes an organic or inorganic anion, it being possible for the radicals $R_1$ to $R_4$ to be substituted by a $COO^-$ or $SO_3^-$ group and $X^-$ ceasing in this case to be applicable, and of highly fluorinated iminium compounds of the formula (II)

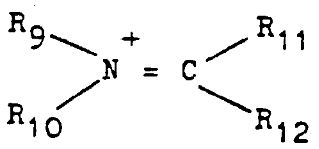 $Y^-$ (II),

in which $R_9$ to $R_{12}$ denote hydrogen atoms or organic radicals, at least one of the radicals $R_9$ to $R_{12}$ denoting a straight-chain or branched fluorine-containing alkyl radical or fluorine-containing alkenyl radical which contains 1 to 69 carbon atoms and 3 to 66 fluorine atoms and which may contain hydroxyl and/or chloromethyl and/or carboxamide and/or sulfonamide and/or urethane and/or amino and/or $R_5$-O-$R_6$ and/or $R_7$C(O)-O-$R_8$ groups, in which $R_5$, $R_6$, $R_7$ and $R_5$ have the abovementioned meanings, and at most three of the radicals $R_9$ to $R_{12}$ denote, independently of one another, hydrogen atoms, straight-chain or branched alkyl radicals or alkenyl radicals containing 1 to 30 carbon atoms, aryl radicals or aralkyl radicals, it being possible for the aryl radicals or aralkyl radicals to be substituted on the aromatic ring by ($C_1$-$C_{30}$)alkyl, ($C_1$-$C_{30}$)alkoxy, hydroxyl groups or halogen atoms, and for two of the radicals $R_9$ to $R_{12}$ to join together to form a mono- or polycyclic ring system containing 4 to 17 carbon atoms which may be interrupted by 1 to 4 heteroatoms and may contain 2 to 9 double bonds and also be substituted by fluorine, chlorine, bromine or iodine atoms, ($C_1$-$C_6$)alkyl, ($C_1$-$C_6$)alkoxy, nitro or amino groups, and $Y^-$ is an organic or inorganic anion, it being possible for the radicals $R_9$ to $R_{12}$ to be substituted by a $COO^-$ or $SO_3^-$ group and $Y^-$ in this case ceasing to be applicable, in a form in which they are incorporated homogeneously into toners and developers, as colorless charge control agents having positive or negative control effect in said toners and developers for electrophotographic recording processes.

2. The use of highly fluorinated ammonium compounds as claimed in claim 1, wherein, in the formula (I) mentioned in claim 1, at least one of the radicals $R_1$ to $R_4$ denotes a straight-chain fluorine-containing alkenyl radical which contains 4 to 14 carbon atoms or a straight-chain or branched fluorine-containing alkyl radical which contains 13 to 69 carbon atoms and which may contain hydroxyl and/or chloromethyl and/or carboxamide and/or urethane and/or amino and/or $R_5$-O-$R_5$ groups in which $R_5$ and $R_6$ are ($C_1$-$C_{30}$)alkyl radicals, and at most three of the radicals $R_1$ to $R_4$ are, independently of one another, hydrogen atoms, straight-chain or branched alkyl radicals containing 1 to 18 carbon atoms, and $X^-$ is an organic or inorganic anion, it being possible for the radicals $R_1$ to $R_4$ to be substituted by a $COO^-$ or $SO_3^-$ group and $X^-$ in this case ceasing to be applicable.

3. The use of highly fluorinated ammonium compounds as claimed in claim 1, wherein, in the formula (I) mentioned in claim 1, two of the radicals $R_1$ to $R_4$ form a mono- or polycyclic ring system containing 4 to 10 carbon atoms which may be interrupted by 1 to 4 heteroatoms and may contain 0 to 4 double bonds and also be substituted by fluorine, chlorine, bromine or iodine atoms, ($C_1$-$C_6$)alkyl, ($C_1$-$C_6$)alkoxy, nitro or amino groups, and at least one of the radicals $R_1$ to $R_4$ denotes a straight-chain fluorine-containing alkenyl radical which contains 4 to 14 carbon atoms or a straight-chain or branched fluorine-containing alkyl radical which contains 13 to 69 carbons atoms and which may contain hydroxyl and/or chloromethyl and/or carboxamide and/or urethane and/or amino and/or $R_5$-O-$R_5$ groups in which $R_5$ and $R_6$ are ($C_1$-$C_{30}$)alkyl radicals, and at most one of the radicals $R_1$ to $R_4$ denotes a hydrogen atom, a straight-chain or branched alkyl radical containing 1 to 18 carbon atoms, and $X^-$ denotes an organic or inorganic anion, it being possible for the radicals $R_1$ to $R_4$ to be substituted by a $COO^-$ or $SO_3^-$ group and $X^-$ ceasing in this case to be applicable.

4. The use of highly fluorinated iminium compounds as claimed in claim 1, wherein, in the formula (II) mentioned in claim 1, at least one of the radicals $R_9$ to $R_{12}$ denotes a straight-chain fluorine-containing alkenyl radical which contains 4 to 14 carbon atoms or a straight-chain or branched fluorine-containing alkyl radical which contains 13 to 69 carbon atoms and which may contain hydroxyl and/or chloromethyl and/or carboxamide and/or urethane and/or amino and/or $R_5$-O-$R_5$ groups in which $R_5$ and $R_6$ are ($C_1$-$C_{30}$)alkyl radicals, and at most three of the radicals $R_9$ to $R_{12}$ denote, independently of one another, hydrogen atoms, straight-chain or branched alkyl radicals containing 1 to 18 carbon atoms, and $Y^-$ denotes an organic or

inorganic anion, it being possible for the radicals $R_9$ and $R_{12}$ to be substituted by a $COO^-$ or $SO_3^-$ group and $Y^-$ ceasing in this case to be applicable.

5. The use of highly fluorinated iminium compounds as claimed in claim 1, wherein, in the formula (II) mentioned in claim 1, two of the radicals $R_9$ to $R_{12}$ form a mono- or polycyclic ring system containing 4 to 10 carbon atoms which may be interrupted by 1 to 4 heteroatoms from the series nitrogen, sulfur or oxygen and may contain 2 to 5 double bonds and also be substituted by fluorine, chlorine, bromine or iodine atoms, $(C_1\text{-}C_6)$alkyl, $(C_1\text{-}C_6)$alkoxy, nitro or amino groups, and at least one of the radicals $R_9$ to $R_{12}$ denotes a fluorine-containing alkenyl radical which contains 4 to 14 carbon atoms or a straight-chain or branched fluorine-containing alkyl radical which contains 13 to 69 carbon atoms and which may contain hydroxyl and/or chloromethyl and/or carboxamide and/or urethane and/or amino and/or $R_5\text{-O-}R_6$ groups in which $R_5$ and $R_6$ are $(C_1\text{-}C_{30})$alkyl radicals, and $Y^-$ is an organic or inorganic anion, it being possible for the radicals $R_9$ to $R_{12}$ to be substituted by a $COO^-$ or $SO_3^-$ group and $Y^-$ ceasing in this case to be applicable.

6. The use of highly fluorinated ammonium compounds or iminium compounds as claimed in claim 1 wherein, in the formulae (I) and (II) mentioned therein, $X^-$ and $Y^-$ denote $Cl^-$, $Br^-$, $I^-$, $PF_6^-$, sulfate, phosphate, cyanate, thiocyanate, $BF_4^-$, tetraphenylborate, p-chlorotetraphenylborate, p-methyltetraphenylborate, tetranaphthylborate, naphthalate, nitrophenolate, zinc tetracyanate, zinc tetrathiocyanate, $CH_3OSO_3^-$, saturated or unsaturated aliphatic or aromatic carboxylate or sulfonate, perfluorinated saturated or unsaturated aliphatic or aromatic carboxylate or sulfonate.

7. The use of highly fluorinated ammonium compounds as claimed in claim 1, wherein, in the formula (I) mentioned in claim 1, at most three of the radicals $R_1$ to $R_4$ denote, independently of one another, a methyl, ethyl, stearyl, 2-hydroxyethyl or $-CH_2\text{-}CH_2\text{-}SO_3^-$ group ($X^-$ ceases in the latter case to be applicable) and at least one of the radicals $R_1$ to $R_4$ denotes one of the groupings

$Rf\text{-}CF\text{=}CH\text{-}CH_2\text{-}$ $(Rf = C_5F_{11}\text{-}C_{11}F_{23})$

and

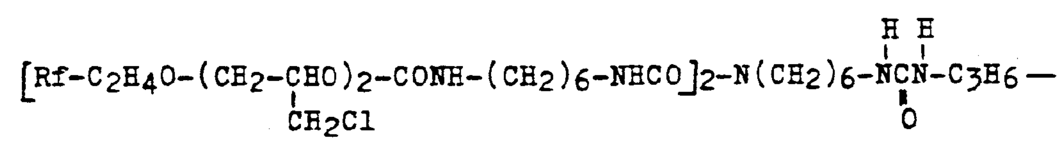

$(Rf = C_8F_{17}\text{-}C_{16}F_{33})$

it being possible for two of the radicals $R_1$ to $R_4$ to form a pyrroline, pyrrolidine, piperidine, morpholine or indoline ring, and $X^-$ being $BF_4^-$, $Cl^-$, $Br^-$, $I^-$, $CH_3\text{-O-}SO_3^-$, tetraphenylborate, p-chlorotetraphenylborate, p-methyltetraphenylborate or tetranaphthylborate.

8. The use of highly fluorinated iminium compounds as claimed in claim 1, wherein, in the formula (II) mentioned in claim 1, at least one of the radicals $R_9$ to $R_{12}$ is a fluorine-containing alkyl radical containing 1 to 14 carbon atoms and at most three of the radicals $R_9$ to $R_{12}$ are, independently of one another, methyl, ethyl, stearyl, 2-hydroxyethyl or $-CH_2\text{-}CH_2\text{-}SO_3^-$ groups ($Y^-$ ceasing in the latter case to be applicable), it being possible for two of the radicals $R_9$ to $R_{12}$ to form a pyridine, pyrazine or quinoline ring, and $R_{12}$ then being a fluorine, chlorine, bromine or iodine atom or a $(C_1\text{-}C_6)$alkyl, $(C_1\text{-}C_6)$alkoxy, nitro or amino group on the ring system, and $X^-$ being $BF_4^-$, $Cl^-$, $Br^-$, $I^-$, $CH_3\text{-O-}SO_3^-$, tetraphenylborate, chlorotetraphenylborate, p-methyltetraphenylborate or tetranaphthylborate.

9. The use of ammonium compounds or iminium compounds mentioned in at least one of claims 1 to 8, individually or in combination, to prepare toners or developers which are used for the electrophotographic copying or reproduction of originals and also for printing electronically, optically or magnetically stored information or in color-proofing.

10. The use of ammonium compounds or iminium compounds mentioned in at least one of claims 1 to 8, wherein the ammonium compounds or iminium compounds, individually or in combination, are used in a concentration of about 0.01 to about 10 percent by weight.

**11.** The use of ammonium compounds or iminium compounds mentioned in at least one of claims 1 to 8, individually or in combination and in homogeneous mixture with a toner binder, to coat carriers which are used in developers for the electrophotographic copying or reproduction of originals and also for printing electronically, optically or magnetically stored information or in color-proofing.

**12.** The use of ammonium compounds or iminium compounds mentioned in at least one of claims 1 to 8, individually or in combination, as charge improving agent in powders and paints for the surface coating of objects made of metal, wood, plastic, glass, ceramic, concrete, textile material, paper or rubber, in particular in electrokinetically sprayed powder coatings.

## Revendications

**1.** Utilisation de composés d'ammonium très fluorés de formule générale (I)

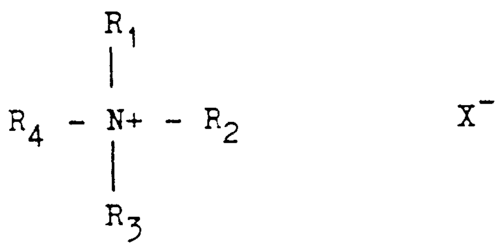

(I)

dans laquelle $R_1$ à $R_4$ représentent des atomes d'hydrogène ou des radicaux organiques, au moins un des radicaux $R_1$ à $R_4$ représentant un radical alkyle fluoré ou alcényle fluoré linéaire ou ramifié avec 1 à 69 atomes de carbone et 3 à 66 atomes de fluor, qui peut contenir des groupes hydroxyle et/ou chlorométhyle et/ou carboxamido et/ou sulfonamido et/ou uréthanne et/ou amino et/ou $R_5$-O-$R_5$ et/ou $R_7$-C(O)-O-$R_8$, où $R_5$, $R_5$, $R_7$ et $R_5$ représentent des radicaux alkyle en ($C_1$-$C_{30}$), et au maximum trois des radicaux $R_1$ à $R_4$, indépendamment l'un de l'autre, représentent des atomes d'hydrogène, des radicaux alkyle ou alcènyle linéaires ou ramifiés avec 1 à 30 atomes de carbone, des radicaux aryle ou des radicaux aralkyle, qui peuvent être substitués par des groupes alkyle en ($C_1$-$C_{30}$), alcoxy en ($C_1$-$C_{30}$) ou hydroxyle ou atomes d'halogènes, deux des radicaux $R_1$ à $R_4$ pouvant se fermer en un système de cycles mono- ou polynucléé avec 4 à 12 atomes de carbone, qui peut être interrompu par 1 à 4 hétéroatomes et contenir O à 6 doubles liaisons, ainsi que substitué par des atomes de fluor, de chlore, de brome ou d'iode, des groupes alkyle en ($C_1$-$C_6$), alcoxy en ($C_1$-$C_6$), nitro ou amino, et $X^-$ représente un anion organique ou minéral, les radicaux $R_1$ à $R_4$ pouvant être substitués par un groupe $COO^-$ ou $SO^-_3$ et dans ce cas, $X^-$ devient sans objet, ainsi que des composés d'immonium très fluorés de formule générale (II)

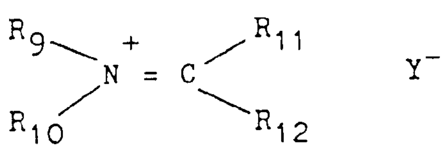

(II)

dans laquelle $R_9$ à $R_{12}$ représentent des atomes d'hydrogène ou des radicaux organiques, au moins un des radicaux $R_9$ à $R_{12}$ représentant un radical alkyle fluoré ou alcényle fluoré linéaire ou ramifié avec 1 à 69 atomes de carbone et 3 à 66 atomes de fluor, qui peut contenir des groupes hydroxyle et/ou chlorométhyle et/ou carboxamido et/ou sulfonamido et/ou uréthanne et/ou amino et/ou $R_5$-O-$R_5$ et/ou $R_7$C(O)-O-$R_8$, où $R_5$, $R_5$, $R_7$ et $R_8$ ont les significations données ci-dessus, et au maximum trois des radicaux $R_9$ à $R_{12}$, indépendamment l'un de l'autre, représentent des atomes d'hydrogène, des radicaux alkyle ou alcényle avec 1 à 30 atomes de carbone, des radicaux aryle ou aralkyle, les radicaux aryle ou aralkyle pouvant être substitués sur le noyau aromatique par des groupes alkyle en ($C_1$-$C_{30}$), alcoxy en ($C_1$-$C_{30}$), hydroxyle ou atomes d'halogènes, et deux des radicaux $R_9$ à $R_{12}$ se ferment en un système de cycles mono- ou polynucléé avec 4 à 17 atomes de carbone qui peut être interrompu par 1 à 4 hétéroatomes et contenir 2 à 9 doubles liaisons, ainsi que substitué par des atomes de fluor, de chlore, de brome et d'iode, des groupes alkyle en ($C_1$-$C_6$), alcoxy en ($C_1$-$C_6$), nitro ou amino et $Y^-$ représente un anion organique ou minéral, les radicaux $R_9$ à $R_{12}$ pouvant être substitués par un groupe $COO^-$ ou $SO^-_3$ et dans ce cas, $Y^-$ devient sans objet, sous forme incorporée de façon homogène dans des toners et révélateurs en tant qu'agent de contrôle de charge ayant un effet de pilotage de la charge positif ou négatif, dans lesdits toners et révélateurs pour le procédé d'enregistrement électrophotographique.

2. Utilisation de composés d'ammonium très fluorés selon la revendication 1, caractérisés en ce que dans la formule générale (I) citée dans la revendication 1, au moins un des radicaux $R_1$ à $R_4$ représente un radical alcényle fluoré linéaire avec 4 à 14 atomes de carbone ou un radical alkyle fluoré linéaire ou ramifié avec 13 à 69 atomes de carbone, qui peut contenir des groupes hydroxyle et/ou chlorométhyle et/ou carboxamido et/ou uréthane et/ou amino et/ou $R_5$-O-$R_6$, où $R_5$ et $R_6$ représentent des radicaux alkyle en ($C_1$-$C_{30}$) et au maximum trois des radicaux $R_1$ à $R_4$, indépendamment l'un de l'autre, représentent des atomes d'hydrogène, des radicaux alkyle linéaires ou ramifiés avec 1 à 18 atomes de carbone et $X^-$ un anion organique ou minéral, les radicaux $R_1$ à $R_4$ pouvant être substitués par un groupe $COO^-$ ou $SO_3^-$ et dans ce cas, $X^-$ devient sans objet.

3. Utilisation de composés d'ammonium très fluorés selon la revendication 1, caractérisés en ce que dans la formule générale (I) citée dans la revendication 1, deux des radicaux $R_1$ à $R_4$ se ferment en un système de cycles mono- ou polynucléé avec 4 à 10 atomes de carbone qui peut être interrompu par 1 à 4 hétéroatomes et contenir O à 4 doubles liaisons, ainsi que substitué par des atomes de fluor, de chlore, de brome et d'iode, des groupes alkyle en ($C_1$-$C_6$), alcoxy en ($C_1$-$C_6$), nitro ou amino, et au moins un des radicaux $R_1$ à $R_4$ représente un radical alcényle linéaire fluoré avec 4 à 14 atomes de carbone ou un radical alkyle linéaire ou ramifié fluoré avec 13 à 69 atomes de carbone, lequel peut contenir des groupes hydroxyle et/ou chlorométhyle et/ou carboxamido et/ou uréthane et/ou amino et/ou $R_5$-O-$R_5$, où $R_5$ et $R_5$ représentent des radicaux alkyle en ($C_1$-$C_{30}$) et au maximum un des radicaux $R_1$ à $R_4$ représente un atome d'hydrogène, un radical alkyle linéaire ou ramifié avec 1 à 18 atomes de carbone et $X^-$ un anion organique ou minéral, les radicaux $R_1$ à $R_4$ pouvant être substitués par un $COO^-$ ou $SO_3^-$ et dans ce cas, $X^-$ devient sans objet.

4. Utilisation de composés d'immonium très fluorés selon la revendication 1, caractérisés en ce que dans la formule générale (II) citée dans la revendication 1, au moins deux des radicaux $R_1$ à $R_{12}$ représente alcényle fluoré linéaire comportant de 4 à 14 atomes de carbone ou un radical alkyle fluoré linéaire ou ramifié comportant de 13 à 69 atomes de carbone, qui peut contenir des groupes hydroxyle et/ou chlorométhyle et/ou carboxamido et/ou uréthanne et/ou amino et/ou $R_5$-O-$R_6$, dans laquelle $R_5$ et $R_6$ représentent des radicaux alkyle en ($C_1$-$C_{30}$), et au maximum trois des radicaux $R_9$ à $R_{12}$, indépendamment l'un de l'autre, représentent des atomes d'hydrogène, des radicaux alkyle linéaires ou ramifiés avec 1 à 18 atomes de carbone et $Y^-$ représente un anion organique ou minéral, les radicaux $R_9$ et $R_{12}$ pouvant être substitués par un groupe $COO^-$ ou $SO_3^-$ et dans ce cas, $Y^-$ devient sans objet.

5. Utilisation de composés d'immonium très fluorés selon la revendication 1, caractérisés en ce que dans la formule générale (II) citée dans la revendication 1, deux des radicaux $R_9$ à $R_{12}$ peuvent se fermer en un système de cycles mono- ou polynucléé avec 4 à 10 atomes de carbone qui peut être interrompu par 1 à 4 hétéroatomes de la série comme de l'azote, du soufre ou de l'oxygène et qui peut contenir de 2 à 5 doubles liaisons et peut être substitué par des atomes de fluor, de chlore, de brome ou d'iode, des groupes alkyle en ($C_1$-$C_6$), alcoxy en ($C_1$-$C_6$), nitro ou amino et au moins un des radicaux $R_9$ à $R_{12}$ représente un radical alcényle fluoré linéaire avec 4 à 14 atomes de carbone ou un radical alkyle linéaire ou ramifié fluoré avec 13 à 69 atomes de carbone, qui peut contenir des groupes hydroxyle et/ou chlorométhyle et/ou carboxamido et/ou uréthanne et/ou amino et/ou $R_5$-O-$R_5$, où $R_5$ et $R_6$ représentent des radicaux alkyle en ($C_1$-$C_{30}$) et $Y^-$ un anion organique ou minéral, les radicaux $R_9$ à $R_{12}$ pouvant être substitués par un groupe $COO^-$ ou $SO_3^-$ et dans ce cas, $Y^-$ devient sans objet.

6. Utilisation de composés d'immonium ou d'ammonium très fluorés selon la revendication 1, caractérisés en ce que dans les formules générales (I) et (II) citées dans celle-ci, $X^-$ et $Y^-$ $Cl^-$, $Br^-$, $J^-$, $PF_6^-$, le sulfate, le phosphate, le cyanate, le thiocyanate, $BF_4^-$, le borate de tétraphényle, le borate de p-chlorotétraphényle, le borate de p-méthyltétraphényle, le borate de tétranaphtyle, le phénolate, le nitrophénolate, le tétracyanate de zinc, le tétrathiocyanate de zinc, $CH_3OSO_3^-$, un sulfonate ou carboxylate aliphatique ou aromatique saturé ou insaturé, sulfonate ou carboxylate aromatique ou aliphatique insaturé ou saturé perfluoré ou sulfonate ou carboxylate aliphatique ou aromatique.

7. Utilisation de composés d'ammonium très fluorés selon la revendication 1, caractérisés en ce que dans

la formule générale (I) citée dans la revendication 1, au maximum trois des radicaux $R_1$ à $R_4$, indépendamment l'un de l'autre, représentent un groupe méthyle, éthyle, stéaryle, 2-hydroxyéthyle ou $-CH_2-CH_2-SO_3^-$ (dans le dernier cas, $X^-$ deviendra sans objet) et au moins l'un des radicaux $R_1$ à $R_4$ représente un des groupements

$Rf-CF=CH-CH_2-$ (Rf = $C_5F_{11}-C_{11}F_{23}$)

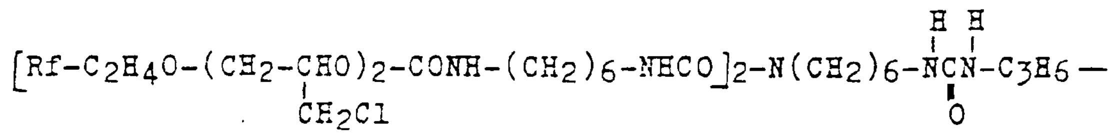

(Rf = $C_8F_{17}-C_{16}F_{33}$)

deux des radicaux $R_1$ à $R_4$ pouvant se fermer en un cycle de pyroline, de pyrrolidine, de pipéridine, de morpholine ou d'indole et représentent aussi $X^-$, $BF_4^-$, $Cl^-$, $Br^-$, $J^-$, $CH_3-O-SO_3^-$, le borate de tétraphényle, le borate de p-chlorotétraphényle, le borate de p-méthyltétraméthyle ou le vorate de tétranaphtyle.

8. Utilisation de composés d'immonium très fluorés selon la revendication 1, caractérisés en ce que dans la formule générale (II) citée dans la revendication 1, au moins un des radicaux $R_9$ à $R_{12}$ représente un radical alkyle fluoré avec 1 à 14 atomes de carbone et au maximum trois des radicaux $R_9$ à $R_{12}$, indépendamment l'un de l'autre, représentent les groupes méthyle, éthyle, stéaryle, 2-hydroxyéthyle ou $-CH_2-CH_2-SO_3^-$ (dans le dernier cas, $Y^-$ deviendra sans objet), deux des radicaux $R_9$ à $R_{12}$ pouvant former un cycle de pyridine, de pyrazine ou de quinoléine et $R_{12}$ représente alors un atome de fluor, de chlore, de brome ou d'iode ou un groupe alkyle en ($C_1$-$C_6$), alcoxy en ($C_1$-$C_6$), nitro ou amino sur le système de cycle et représente aussi $X^-$, $BF_4^-$, $Cl^-$, $Br^-$, $J^-$, $CH_3-O-SO_3^-$, le borate de tétraphényle, le borate de p-chlorotétraphényle, le borate de p-méthyltétraphényle ou le borate de tétranaphtyle.

9. Utilisation de composés d'immonium ou d'ammonium cités dans au moins l'une des revendications 1 à 8, seuls ou en combinaison, pour la préparation de toners ou de révélateurs, que l'on utilise pour la copie ou la multicopie de modèles ainsi que pour l'impression d'informations saisies par la voie électronique, optique ou magnétique ou dans l'épreuve de couleur.

10. Utilisation de composés d'immonium ou d'ammonium cités dans au moins l'une des revendications 1 à 8, caractérisés en ce qu'on utilise les composés d'ammonium ou d'immonium seuls ou en combinaison en une concentration d'environ 0,01 à environ 10 % en poids.

11. Utilisation de composés d'immonium ou d'ammonium cités dans au moins l'une des revendications 1 à 8, seuls ou en combinaison, en mélange homogène avec un liant de toner pour le revêtement de supports que l'on utilise dans les révélateurs pour la copie ou la multiplication de modèles par électrophotographie ainsi que pour l'impression des informations saisies par voie électronique, optique ou magnétique ou dans l'épreuve des couleurs.

12. Utilisation de composés d'immonium ou d'ammonium cités dans au moins l'une des revendications 1 à 8, seuls ou en combinaison, en tant qu'agents d'amélioration de charge dans des poudres et laques pour le revêtement des surfaces des objets en métal, bois, matières plastiques, verre, céramique, béton, matières textiles, papier ou caoutchouc, plus particulièrement pour poudres appliquées par pulvérisation électrocinétique.